# EUROPEAN PATENT APPLICATION

(11) **EP 4 503 268 A1**
(43) Date of publication of application: **05.02.2025**
(21) Application number: 22955541.2
(22) Date of filing: 08.11.2022
(51) Int. Cl.: H01M 10/655, H01M 10/615, H01M 10/625

(54) **HEATING DEVICE, BATTERY, AND ELECTRICAL DEVICE**

(30) Priority: 15.08.2022 CN 202210971703
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: CHEN, Renyu, hangzhou, Jiangsu 213300 (CN)
(74) Representative: Ran, Handong
(86) International application number: PCT/CN2022/130483
(87) International publication number: WO 2024/036771

(57) **Abstract**

Provided are a heating device (40), a battery (100), and an electrical device. The heating device (40) comprises: a heating element (41) for heating battery cells (20), the heating element (41) being stretchable in the length direction thereof; and an adapter component (42) for connecting the heating element (41) to the battery cells (20), the adapter component (42) comprising two or more adapters (421) distributed in the length direction, wherein the heating device (40) switches from an initial state to a stretched state; in the initial state, in the length direction, the length dimension of the heating element (41) is a first size, and two adjacent adapters (421) are connected to each other; in the stretched state, in the length direction, the heating element (41) is stretched and extends from the first size to a second size, and the at least two adjacent adapters (421) are disconnected from each other. According to the heating device (40), the battery (100) and the electrical device, the heating device (40) can ensure the heating requirements for the battery cells (20), and can be compatible with a thickness change caused by the expansion of the battery cells (20), thereby avoiding the occurrence of wrinkling and overheating phenomena, and ensuring the safety performance of the battery (100).

## Description

### CROSS-REFERENCE TO RELATED APPLICATIONS

This application claims priority to Chinese Patent Application No. 202210971703.3, filed on August 15, 2022 and entitled "HEATING APPARATUS, BATTERY, AND ELECTRIC APPARATUS", which is incorporated herein by reference in its entirety.

### TECHNICAL FIELD

This application relates to the field of batteries, and in particular, to a heating apparatus, a battery, and an electric apparatus.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

In some cases, a heating apparatus is usually disposed inside a battery structure to heat the battery cell, thereby satisfying a working need of the battery in a low-temperature environment. However, existing heating apparatus structures have a defect, and when the battery cell is heated and swells, the heating apparatus structures are incompatible with a thickness change caused due to swelling of a battery cell, and are likely to wrinkle and cause a dry burning phenomenon, which affects overall safety performance of the battery.

### SUMMARY

In view of the foregoing problem, this application provides a heating apparatus, a battery, and an electric apparatus. The heating apparatus can not only satisfy a heating need of the battery cell, but also be compatible with a thickness change caused due to swelling of the battery cell, to avoid wrinkling and a dry burning phenomenon, thereby ensuring safety performance of the battery.

According to a first aspect, this application provides a heating apparatus, including: a heating sheet, configured to heat a battery cell, where the heating sheet is arranged in a stretchable manner in a length direction of the heating sheet; and an adapting component, configured to connect the heating sheet to the battery cell, where the adapting component includes at least two adapting bodies distributed along the length direction; where the heating apparatus is able to be switched from an initial state to a stretched state; in the initial state, along the length direction, a length dimension of the heating sheet is a first dimension, and two adjacent adapting bodies are connected; and in the stretched state, along the length direction, the heating sheet is stretched and extended from the first dimension to a second dimension, at least two adjacent adapting bodies are disconnected from each other, and the second dimension is a vertical distance between two end surfaces of the heating sheet along the length direction in the stretched state.

The heating apparatus provided in this embodiment of this application includes the heating sheet and the adapting component, the heating sheet can be connected to the battery cell through the adapting component, and the battery cell is heated by the heating sheet to ensure that the battery cell can work at predetermined temperature. Because the heating sheet is arranged in a stretchable manner along the length direction of the heating sheet, the adapting component includes the at least two adapting bodies distributed along the length direction, and the heating apparatus is able to be switched from the initial state to the stretched state, when the battery cell swells, the heating apparatus is able to be switched from the initial state to the stretched state, the heating sheet is extended from the first dimension to the second dimension, and the at least two adjacent adapting bodies are disconnected from each other, to be compatible with the thickness change caused due to swelling of the battery cell. Due to elongation of the heating sheet and the disconnection of the adapting bodies, a wrinkling phenomenon of the heating sheet can be avoided, and the heating sheet can always be connected to the corresponding battery cell to avoid the dry burning phenomenon, thereby ensuring the safety performance of the battery.

In some embodiments, the heating sheet includes at least two heating units and a connecting body, the at least two heating units are distributed along the length direction, the connecting body is configured to connect two adjacent heating units, the connecting body is arranged in a stretchable manner along the length direction, and each heating unit is connected to one adapting body.

In the heating apparatus provided in this embodiment of this application, through the foregoing settings, when the battery cell swells and is increased in a thickness dimension, the at least two adapting bodies are disconnected and positions thereof change in the length direction as the battery cell swells. Because each heating unit is connected to one adapting body, the corresponding heating unit can move along with the adapting body, and the connecting body is arranged in a stretchable manner in the length direction, when the heating unit moves along with the adapting body, the connecting body can extend, which can ensure a compatibility effect on a thickness dimension change during swelling of the battery cell and avoid the dry burning phenomenon caused due to wrinkling of the heating apparatus, thereby improving the safety performance of the battery.

In some embodiments, along the length direction, the connecting body is extended along a curved track.

In the heating apparatus provided in this embodiment of this application, the connecting body is arranged in the extendable manner along the curved track in the length direction, so that the connecting body can store a specific redundant length. When the thickness dimension is increased because the battery cell swells, the connecting body extending along the curved track is stretched to be compatible with the thickness dimension change of the battery cell.

In some embodiments, along the length direction, the connecting body is extended along a zigzag line track.

In the heating apparatus provided in this embodiment of this application, the connecting body is extended along the zigzag line track in the length direction, so that the connecting body can also store a specific redundant length. When the thickness dimension is increased because the battery cell swells, the connecting body extending along the zigzag line track is stretched to be compatible with the thickness dimension change of the battery cell.

In some embodiments, the heating unit has a polygonal block-shaped structure.

In the heating apparatus provided in this embodiment of this application, the heating unit is the polygonal block-shaped structure, to facilitate molding, which can not only satisfy a need of a connection to the adapting component, but also increase the heating area for the battery cell, thereby ensuring a heating effect.

In some embodiments, the heating sheet further includes an input terminal and an output terminal, and in two outermost heating units along the length direction, one heating unit is connected to the input terminal and the other heating unit is connected to the output terminal.

In the heating apparatus provided in this embodiment of this application, the input terminal and the output terminal are disposed, which can facilitate a connection between the heating sheet and an external structure, to obtain energy and convert the energy into heat energy for transmission in each heating unit, thereby satisfying a heating need of the battery cell.

In some embodiments, the heating unit, the connecting body, the input terminal and the output terminal form an integrated structure.

In the heating apparatus provided in this embodiment of this application, the heating unit, the connecting body, the input terminal, and the output terminal form the integrated structure, which can not only ensure the strength of connection between the heating unit, the connecting body, the input terminal, and the output terminal, but also facilitate molding of the heating sheet.

In some embodiments, the heating apparatus further includes a heat conducting layer, the heat conducting layer is connected to the heating sheet, and the heat conducting layer is configured to transfer heat from the heating sheet to the battery cell.

In the heating apparatus provided in this embodiment of this application, the heat conducting layer is disposed, so that the heat of the heating sheet can be rapidly and uniformly transferred to the battery cell by using the heat conducting layer, thereby satisfying the heating need of the battery cell.

In some embodiments, the heat conducting layer is an elastomer and is configured to abut against the battery cell.

In the heating apparatus provided in this embodiment of this application, the heat conducting layer uses the elastomer and is configured to abut against the battery cell, so that the heat conducting layer can adapt to deformation of the battery cell and always keep in contact with the battery cell when the battery cell swells and deforms, thereby ensuring a heat transfer effect and reducing a probability of dry burning of the heating apparatus. In addition, the heat conducting layer is in the form of the elastic pad, which can also avoid rigid contact between the heating apparatus and the battery cell, and reduce damage to the battery cell in a vibration process during battery transportation or the like.

In some embodiments, the adapting component has a restraint trough, a shape of the heating sheet matches a shape of the restraint trough, the heating sheet is clamped in the restraint trough, and the restraint trough is configured to restrict relative positions of the heating sheet and the adapting component.

In the heating apparatus provided in this embodiment of this application, the restraint trough is provided on the adapting component, so that a connection between the adapting component and the heating sheet can be implemented via the restraint trough. In addition, when being mounted to the adapting component, the heating sheet can be positioned and restricted by using the restraint trough, thereby satisfying a mounting need.

In some embodiments, the restraint trough has a bottom wall abutting against the heating sheet, the adapting component further has an avoidance hole, and the avoidance hole penetrates through the bottom wall along the thickness direction of the heating sheet.

In the heating apparatus provided in this embodiment of this application, the avoidance hole is disposed, so that the heating sheet can be in contact with the battery cell directly or indirectly through the heat conducting layer, to satisfy a heat transfer need and a heating need of the battery cell.

In some embodiments, the heating sheet is adhered to the adapting component.

In the heating apparatus provided in this embodiment of this application, the heating sheet and the adapting component are adhered, so that strength of the connection between the heating sheet and the adapting component can be ensured, without the need of disposing a structure such as a connection hole on the surface of the heating sheet, thereby ensuring heating performance of the heating sheet and facilitating implementation of the connection between the heating sheet and the adapting component.

In some embodiments, the restraint trough has a bottom wall abutting against the heating sheet, the adapting component further has an adhesive accommodating trough, the adhesive accommodating trough is formed by recessing the bottom wall in a direction leaving the heating sheet, an adhesive is arranged in the adhesive accommodating trough, and the adhesive is configured to connect the heating sheet to the adapting component.

In the heating apparatus provided in this embodiment of this application, the adhesive accommodating trough is provided in the bottom wall of the restraint trough, so that an adhesive applying area and space can be provided, which facilitates fastening of the heating sheet in the restraint trough of the adapting component via the adhesive, thereby preventing the heating sheet from moving and affecting a heat conducting effect during transportation and assembly processes, and avoiding uneven heating or a dry burning phenomenon.

In some embodiments, the number of adhesive accommodating troughs is at least two, and the at least two adhesive accommodating troughs are arranged at intervals.

In the heating apparatus provided in this embodiment of this application, the number of adhesive accommodating troughs is set to at least two, so that the adhesive can be disposed in each adhesive accommodating trough. An adhesion area between the heating sheet and the adapting component can be increased in a multi-point connection mode, so that the strength of the connection between the heating sheet and the adapting component can be ensured.

In some embodiments, a connecting portion is arranged between two adjacent adapting bodies along the length direction; in the initial state, the two adjacent adapting bodies are connected through the connecting portion; and in the stretched state, the connecting portion is broken, so that the two adjacent adapting bodies are disconnected from each other.

In the heating apparatus provided in this embodiment of this application, the connecting portion is disposed between the two adjacent adapting bodies, so that the two adjacent adapting bodies can be connected into a single entity through the connecting portion in the initial state, which can ensure integrity of the adapting component, thereby facilitating fitting and mounting of the adapting component, the heating sheet, and the battery cell. When the thickness dimension is increased because the battery cell swells and deforms, the connecting portion can be broken before the adapting body, so that two adjacent adapting bodies are disconnected from each other and can move with the swelling of the battery cell, to be compatible with the thickness dimension change of the battery cell and avoid a dry burning phenomenon, thereby ensuring safety performance of the battery.

In some embodiments, a thickness of the connecting portion is less than a thickness of the adapting body in the thickness direction of the heating sheet.

In the heating apparatus provided in this embodiment of this application, a thickness of the connecting portion is less than a thickness of the adapting body, which can easily ensure that strength of the connecting portion is less than strength of the adapting body, so that the connecting portion is easily broken when the heating apparatus is switched from the initial state to the stretched state, to be compatible with the thickness dimension change of the battery cell.

In some embodiments, in the width direction of the heating sheet, the width of the connecting portion is less than the width of the adapting body.

In the heating apparatus provided in this embodiment of this application, a width of the connecting portion is less than a width of the adapting body, which can also easily ensure that strength of the connecting portion is less than strength of the adapting body, so that the connecting portion is easily broken when the heating apparatus is switched from the initial state to the stretched state, to be compatible with the thickness dimension change of the battery cell.

According to a second aspect, this application provides a battery, including a plurality of battery cells; and the foregoing heating apparatus, where the heating sheet are connected to the plurality of battery cells through the adapting component to heat the plurality of battery cells.

According to a third aspect, this application provides an electric apparatus including the foregoing battery, where the battery is configured to supply electric energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same parts. In the accompanying drawings:
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery module according to an embodiment of this application from an angle of view;
FIG. 4 is a schematic structural diagram of a battery module according to an embodiment of this application from another angle of view;
FIG. 5 is a schematic structural diagram of a heating apparatus according to an embodiment of this application;
FIG. 6 is a schematic structural diagram of a heating sheet according to an embodiment of this application;
FIG. 7 is a schematic structural diagram of a heating apparatus according to another embodiment of this application;
FIG. 8 is a schematic structural diagram of an adapting component according to an embodiment of this application from an angle of view;
FIG. 9 is a schematic structural diagram of an adapting component according to an embodiment of this application from another angle of view;
FIG. 10 is a partially enlarged view of position A in FIG. 9;
FIG. 11 is a side view of an adapting component according to an embodiment of this application;
FIG. 12 is a partially enlarged view of position B in FIG. 11;
FIG. 13 is a top view of an adapting component according to an embodiment of this application; and
FIG. 14 is a partially enlarged view of position C in FIG. 13.

Reference numerals in the specific embodiments are as follows:
where:
1000 - vehicle;
100 - battery; 200 - controller; 300 - motor;
10 - box; 11 - first portion; 12 - second portion; 13 - accommodating space;
20 - battery cell; 21 - housing; 22 - end cover assembly; 30 - battery module;
40 - heating apparatus;
41 - heating sheet; 411 - heating unit; 412 - connecting body; 413 - input terminal; 414 - output terminal;
42 - adapting component; 421 - adapting body; 422 - connecting portion; 423 - restraint trough; 4231 - bottom wall; 4232 - avoidance hole; 424 - adhesive accommodating trough;
43 - heat conducting layer;
X - length direction; Y - thickness direction; and Z - width direction.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

It should be noted that, unless otherwise specified, the technical terms or scientific terms used in the embodiments of this application shall have ordinary meanings understood by persons skilled in the art to which the embodiments of this application belong.

In the description of the embodiments of this application, the orientations or positional relationships indicated by the technical terms "center", "longitudinal" "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the apparatuses or components mentioned must have specific orientations, or must be constructed or manipulated according to specific orientations, and therefore shall not be construed as any limitations on embodiments of this application.

In addition, the technical terms "first", "second", and the like are merely for the purpose of description, and shall not be understood as any indication or implication of relative importance or any implicit indication of the number of technical features indicated. In the description of this application, "a plurality of means at least two unless otherwise specifically stated.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

In the description of the embodiments of this application, unless otherwise clearly specified and defined, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The applicant has noticed that in some cases, a heating apparatus is usually disposed inside a battery structure to heat the battery cell, thereby satisfying a working need of the battery in a low-temperature environment. However, existing heating apparatus structures have a defect and are likely to wrinkle and cause a dry burning phenomenon, which affects overall safety performance of the battery. Through further research, the applicant has found that an existing heating apparatus usually uses a type of heating film prepared via printing technology and the like, and cannot be extended in a length direction. When the thickness is changed due to swelling of the battery cell, the existing heating apparatus is incompatible with the thickness change caused due to swelling of the battery cell, and therefore, the heating apparatus is likely to wrinkle and even experience a dry burning phenomenon, which affects the safety performance of the battery.

To alleviate the problems of wrinkling and even dry burning of the heating apparatus, through research, the applicant has found that a structure of the heating apparatus can be changed, so that the shape of the heating apparatus can change along with the thickness of the battery cell, to be compatible with the thickness change caused due to swelling of the battery cell.

Based on the foregoing considerations, to resolve the problems of wrinkling and even dry burning of the heating apparatus, the inventor has designed a heating apparatus after in-depth research. The heating apparatus includes a heating sheet and an adapting component, the heating sheet is configured to heat the battery cell, and the heating sheet is arranged in a stretchable manner in a length direction of the heating sheet. The adapting component is configured to connect the heating sheet to the battery cell, and the adapting component includes at least two adapting bodies distributed along the length direction. The heating apparatus is able to be switched from an initial state to a stretched state. In the initial state, along the length direction, a length dimension of the heating sheet is the first dimension, and two adjacent adapting bodies are connected; and in the stretched state, along the length direction, the heating sheet is stretched and extended from the first dimension to the second dimension, and at least two adjacent adapting bodies are disconnected from each other.

In such battery cell, the heating sheet can be connected to the battery cell through the adapting component, and the battery cell is heated by the heating sheet to ensure that the battery cell can work at predetermined temperature. Because the heating sheet is arranged in a stretchable manner along the length direction of the heating sheet, the adapting component includes the at least two adapting bodies distributed along the length direction, and the heating apparatus is able to be switched from the initial state to the stretched state, when the battery cell swells, the heating apparatus is able to be switched from the initial state to the stretched state, the heating sheet is extended from the first dimension to the second dimension, and the at least two adjacent adapting bodies are disconnected from each other, to be compatible with the thickness change caused due to swelling of the battery cell. Due to elongation of the heating sheet and the disconnection of the adapting bodies, a wrinkling phenomenon of the heating sheet can be avoided, and the heating sheet can always be connected to the corresponding battery cell to avoid the dry burning phenomenon, thereby ensuring the safety performance of the battery.

The technical solution described in the embodiments of this application is applicable to batteries and electric apparatuses using a battery.

The electric apparatus may be vehicles, mobile phones, portable devices, notebook computers, ships, spacecrafts, electric toys, electric tools, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

It should be understood that the technical solutions described in the embodiments of this application are applicable to not only the battery and the electric apparatus described above, but also applicable to all batteries and electric apparatuses using batteries. However, for brevity of description, in the following embodiments, an electric vehicle is used as an example for description.

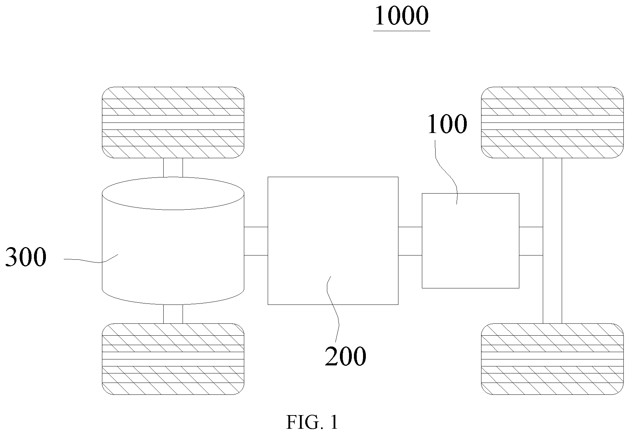

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

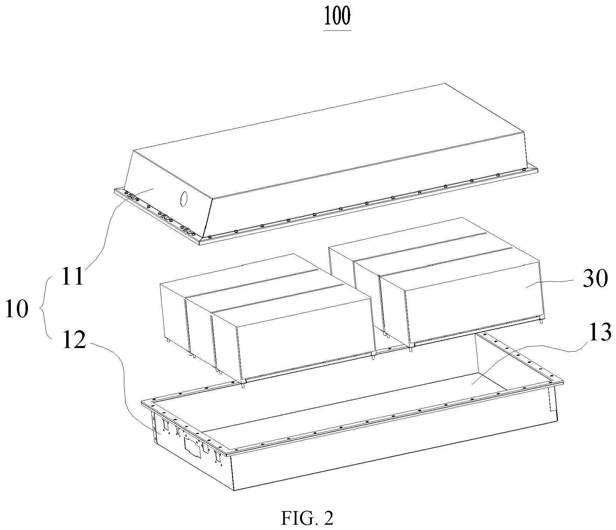

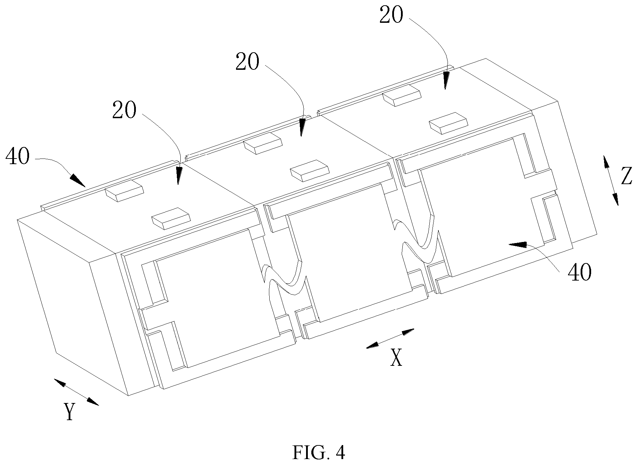

Referring to FIG. 2 to FIG. 5, the battery 100 includes a box 10, a battery cell 20, and a heating apparatus 40, and the battery cell 20 and the heating apparatus 40 are accommodated in the box 10.

The box 10 is configured to provide an accommodating space for the battery cell 20 and the heating apparatus 40. The box 10 may have various structures. In some embodiments, the box 10 may include a first portion 11 and a second portion 12. The first portion 11 and the second portion 12 fit together, so that the first portion 11 and the second portion 12 jointly define an accommodating space 13 for accommodating the battery cell 20. The second portion 12 may be a hollow structure with one end open, and the first portion 11 may be a plate structure, where the first portion 11 covers an open side of the second portion 12, so that the first portion 11 and the second portion 12 jointly define the accommodating space 13. The first portion 11 and the second portion 12 each may alternatively be a hollow structure with one side open, and the open side of the first portion 11 fits the open side of the second portion 12. Certainly, the box 10 formed by the first portion 11 and the second portion 12 may be in various shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed by a plurality of battery cells 20 being connected in series, parallel, or series-parallel first to form a battery module 30, and then a plurality of battery modules 30 being connected in series, parallel, or series-parallel to form an entirety which is accommodated in the box 10. The battery 100 may further include other structures. For example, the battery 100 may further include a busbar configured to implement an electrical connection between the plurality of battery cells.

Each battery cell 20 may be a secondary battery or a primary battery, and may be a lithiumsulfur battery, a sodium-ion battery, or a magnesium-ion battery, without being limited thereto. The battery cell 20 may be cylindrical, flat, cuboid, or of other shapes. The battery cell 20 refers to a smallest unit constituting a battery. Optionally, the battery cell 20 includes a housing 21, an electrode assembly, and an end cover assembly 22. The housing has an opening, the electrode assembly is arranged in the housing 21, the electrode assembly includes a tab, and the end cover assembly 22 is arranged to seal the opening.

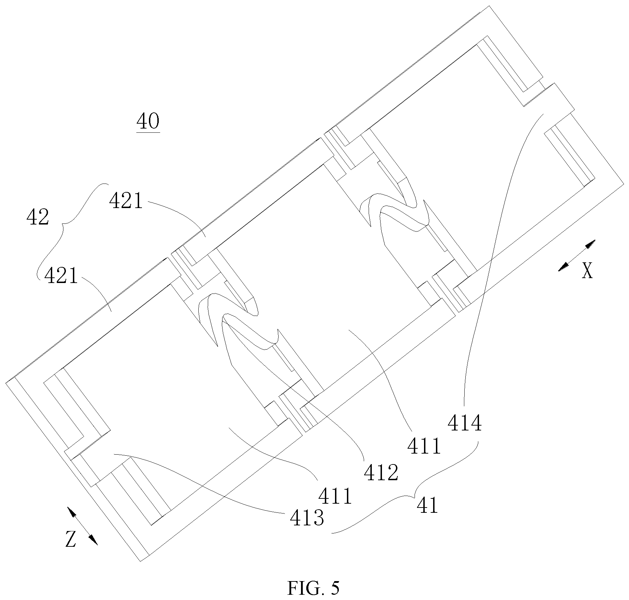

Referring to FIG. 5, the heating apparatus 40 provided in this embodiment of this application includes a heating sheet 41 and an adapting component 42, the heating sheet 41 is configured to heat the battery cell 20, and the heating sheet 41 is arranged in a stretchable manner in a length direction X of the heating sheet 41. The adapting component 42 is configured to connect the heating sheet 41 to the battery cell 20, and the adapting component 42 includes at least two adapting bodies 421 distributed along the length direction X. The heating apparatus 40 is able to be switched from an initial state to a stretched state. In the initial state, along the length direction X, a length dimension of the heating sheet 41 is the first dimension, and two adjacent adapting bodies 421 are connected, and in the stretched state, along the length direction X, the heating sheet 41 is stretched and extended from the first dimension to the second dimension, and at least two adjacent adapting bodies 421 are disconnected from each other.

Optionally, the number of adapting bodies 421 included in the adapting component 42 can be two or more than two, and two adjacent adapting bodies 421 are connected.

Optionally, strength of a connection between two adjacent adapting bodies 421 is less than strength of the adapting bodies 421. That is, force required for separating the two adjacent adapting bodies 421 is set as less than force required for breaking the adapting body 421 into two parts.

Optionally, the heating sheet 41 may be at least partially connected to the adapting component 42, and the heating sheet 41 is connected to the battery cell 20 through the adapting component 42.

Optionally, the heating sheet 41 can directly come into contact with the battery cell 20 and heat the battery cell 20. Certainly, another heat conducting member can be arranged between the heating sheet 41 and the battery cell 20 to transfer heat to the battery cell 20, thereby implementing heating of the battery cell 20.

Optionally, the heating sheet 41 can use an electrical heating method, and can generate heat when being powered on.

Optionally, when the battery cell 20 is heated and swells to reach a predetermined thickness, the heating apparatus 40 is able to be switched from the initial state to the stretched state.

Optionally, the entire heating sheet 41 may be made of a material that can deform under stretching, and can be stretched when being subjected to pulling force exceeding a predetermined range in the length direction X. Certainly, the heating sheet 41 may alternatively be in a partially stretchable form. For example, the heating sheet 41 may be partially set to be in a form of a curve or a zigzag line along the length direction X, so that the heating sheet 41 can be partially stretched when being subjected to pulling force exceeding the predetermined range in the length direction X.

Optionally, the first dimension can be understood as a vertical distance between the two end surfaces of the heating sheet 41 in the length direction X in the initial state. The second dimension can be understood as a vertical distance between the two end surfaces of the heating sheet 41 in the length direction X in the stretched state.

Optionally, the initial state may mean that the battery cell 20 does not swell or swells so little that the thickness of the battery cell 20 is still within a preset threshold range when the heating apparatus 40 is used in the battery. Optionally, the stretched state may mean that the battery cell 20 swells to cause the thickness of the battery cell 20 to exceed the preset threshold range.

Optionally, in the stretched state, at least two adjacent adapting bodies 421 are disconnected from each other. In other words, in the stretched state, the at least two adjacent adapting bodies 421 are separated from each other, and an interval may be formed between the at least two adjacent adapting bodies 421 in the length direction X.

In the heating apparatus 40 provided in this embodiment of this application, the heating sheet 41 can be connected to the battery cell 20 through the adapting component 42, and the battery cell 20 is heated by the heating sheet 41 to ensure that the battery cell 20 can work at predetermined temperature. Because the heating sheet 41 is arranged in a stretchable manner along the length direction X of the heating sheet 41, the adapting component 42 includes the at least two adapting bodies 421 distributed along the length direction X, and the heating apparatus 40 is able to be switched from the initial state to the stretched state, when the battery cell 20 swells, the heating apparatus 40 is able to be switched from the initial state to the stretched state, the heating sheet 41 is extended from the first dimension to the second dimension, and the at least two adjacent adapting bodies 421 are disconnected from each other, to be compatible with the thickness change caused due to swelling of the battery cell 20. Due to elongation of the heating sheet 41 and the disconnection of the adapting bodies 421, a wrinkling phenomenon of the heating sheet 41 can be avoided, and the heating sheet 41 can always be connected to the corresponding battery cell 20 to avoid the dry burning phenomenon, thereby ensuring the safety performance of the battery.

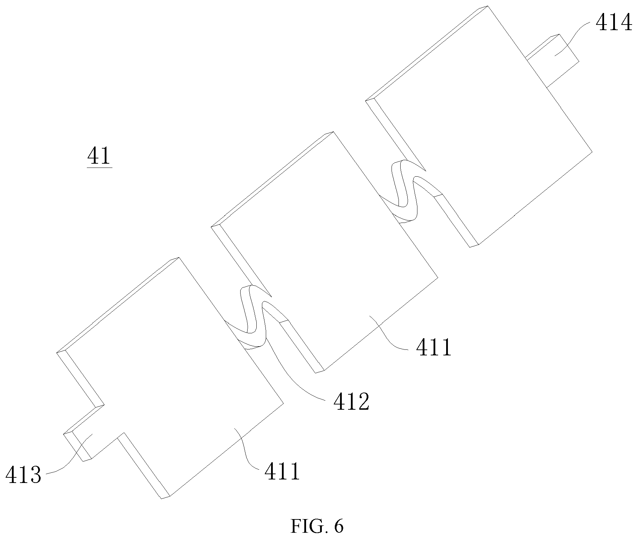

Referring to FIG. 6, in some embodiments, the heating sheet 41 includes at least two heating units 411 and a connecting body 412, the at least two heating units 411 are distributed along the length direction X, the connecting body 412 is configured to connect two adjacent heating units 411, the connecting body 412 is arranged in a stretchable manner along the length direction X, and each heating unit 411 is connected to one adapting body 421.

Optionally, the number of heating units 411 included in the heating sheet 41 may be two or more than two.

Optionally, the number of heating units 411 may be the same as the number of adapting bodies 421 and the heating units 411 may be arranged in a one-to-one correspondence with the adapting bodies 421.

Optionally, each heating unit 411 and the adapting body 421 may be connected with each other via clamping, adhesion and the like.

In the heating apparatus 40 provided in this embodiment of this application, through the foregoing settings, when the battery cell 20 swells and is increased in a thickness dimension, at least two adapting bodies 421 are disconnected and positions thereof change in the length direction X as the battery cell 20 swells. Because each heating unit 411 is connected to one adapting body 421, the corresponding heating unit 411 can move along with the adapting body 421, and the connecting body 412 is arranged in a stretchable manner in the length direction X, when the heating unit 411 moves along with the adapting body 421, the connecting body 412 can extend, which can ensure a compatibility effect on a thickness dimension change during swelling of the battery cell 20 and avoid the dry burning phenomenon caused due to wrinkling of the heating apparatus 40, thereby improving the safety performance of the battery.

In some embodiments, along the length direction X, the connecting body 412 is extended along a curved track.

Optionally, the curved track may include an arc-shaped segment along the length direction X, and two adjacent arc-shaped segments may be directly connected and protrude in opposite directions. Certainly, two adjacent arc-shaped segments may also be adaptively connected through a transition segment. In this case, protruding directions of the two related arc-shaped segments may also be the same. Optionally, the protruding direction of the arc-shaped segment and the length direction X intersect with each other, or optionally, are perpendicular to each other.

In the heating apparatus 40 provided in this embodiment of this application, the connecting body 412 is extended along the curved track in the length direction X, so that the connecting body 412 can store a specific redundant length. When the thickness dimension is increased because the battery cell 20 swells, the connecting body 412 extending along the curved track is stretched to be compatible with the thickness dimension change of the battery cell 20.

In some embodiments, along the length direction X, the connecting body 412 is extended along a zigzag line track.

Optionally, these tracks may include a plurality of zigzag line segments along the length direction X, and bending directions of the plurality of zigzag line segments may be the same or certainly, may alternatively be opposite. Optionally, the zigzag line segment can be in a shape of a sharp corner. For example, the zigzag line segment may be triangular, or certainly, may alternatively be trapezoidal.

In the heating apparatus 40 provided in this embodiment of this application, the connecting body 412 is extended along the zigzag line track in the length direction X, so that the connecting body 412 can also store a specific redundant length. When the thickness dimension is increased because the battery cell 20 swells, the connecting body 412 extending along the zigzag line track is stretched to be compatible with the thickness dimension change of the battery cell 20.

In some optional embodiments, the heating unit 411 has a polygonal block-shaped structure.

Optionally, the heating unit 411 may be a rectangular block, a pentagonal block, a hexagonal block, or the like, as long as a heating area can be ensured for the battery cell 20.

In the heating apparatus 40 provided in this embodiment of this application, the heating unit 411 is the polygonal block-shaped structure, to facilitate molding, which can not only satisfy a need of a connection to the adapting component 42, but also increase the heating area for the battery cell 20, thereby ensuring a heating effect.

In some optional embodiments, the heating sheet 41 further includes an input terminal 413 and an output terminal 414, and in two outermost heating units 411 along the length direction X, one heating unit 411 is connected to the input terminal 413 and the other heating unit 411 is connected to the output terminal 414.

Optionally, the input terminal 413 and the output terminal 414 may be connected to the corresponding heating unit 411 in a fixed connection manner, certainly, may alternatively be connected to the corresponding heating unit 411 in a pluggable and detachable manner.

Optionally, the input terminal 413 may be connected to one end of one of the two outermost heating units 411 in the length direction X, or certainly, may alternatively be connected to one end of the heating unit 411 in a direction intersecting with the length direction X.

Optionally, the output terminal 414 may be connected to one end of the other of the two outermost heating units 411 in the length direction X, or certainly, may alternatively be connected to one end of the heating unit 411 in the direction intersecting with the length direction X.

In the heating apparatus 40 provided in this embodiment of this application, the input terminal 413 and the output terminal 414 are disposed, which can facilitate a connection between the heating sheet 41 and an external structure, to obtain energy and convert the energy into heat energy for transmission in each heating unit 411, thereby satisfying a heating need of the battery cell 20.

In some optional embodiments, in the heating apparatus 40 provided in this embodiment of this application, the heating unit 411, the connecting body 412, the input terminal 413, and the output terminal 414 form an integrated structure.

Optionally, a material of the heating sheet 41 may include Fe-Cr-Al electrothermal alloy and the like, which has strong oxidation resistance, light weight, and low price. Optionally, the heating unit 411, the connecting body 412, the input terminal 413 and the output terminal 414 may be integrally cast or machined.

In the heating apparatus 40 provided in this embodiment of this application, the heating unit 411, the connecting body 412, the input terminal 413, and the output terminal 414 form the integrated structure, which can not only ensure the strength of connection between the heating unit 411, the connecting body 412, the input terminal 413, and the output terminal 414, but also facilitate molding of the heating sheet 41.

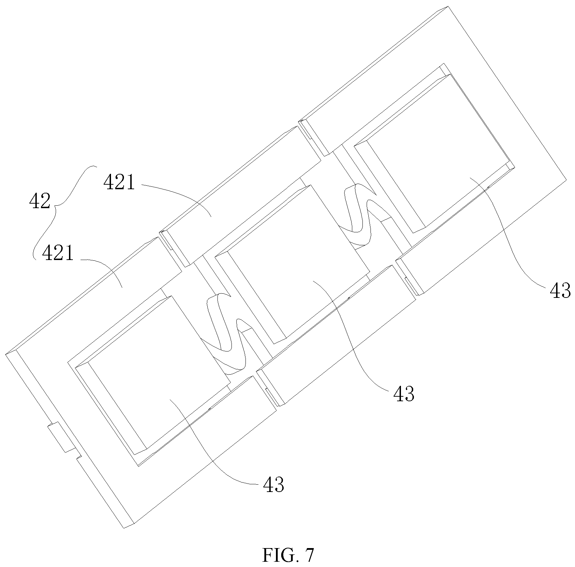

Referring to FIG. 7, in some optional embodiments, the heating apparatus 40 further includes a heat conducting layer 43, the heat conducting layer 43 is connected to the heating sheet 41, and the heat conducting layer 43 is configured to transfer heat from the heating sheet 41 to the battery cell 20.

Optionally, the heat conducting layer 43 can be made of a heat conducting silica gel pad, a single-component film adhesive with heat conducting performance, or the like, to enhance compatibility and reduce dry burning caused due to improper adhesion.

Optionally, the heat conducting layer 43 and the heating sheet 41 may be connected to each other via adhesion or the like.

Optionally, the heat conducting layer 43 may be made of an insulating material to insulate the heating apparatus 40 from the battery cell 20.

Optionally, the heat conducting layer 43 may be disposed on each heating unit 411.

In the heating apparatus 40 provided in this embodiment of this application, the heat conducting layer 43 is disposed, so that the heat of the heating sheet 41 can be rapidly and uniformly transferred to the battery cell 20 by using the heat conducting layer 43, thereby satisfying the heating need of the battery cell 20.

In some optional embodiments, in the heating apparatus 40 provided in this embodiment of this application, the heat conducting layer 43 is an elastomer and is configured to abut against the battery cell 20.

Optionally, the heat conducting layer 43 may be in a form of an elastic pad.

Optionally, regardless of whether the heating apparatus 40 is in the initial state or the stretched state, the heat conducting layer 43 abuts against the battery cell 20.

In the heating apparatus 40 provided in this embodiment of this application, the heat conducting layer 43 uses the elastomer and is configured to abut against the battery cell 20, so that the heat conducting layer 43 can adapt to deformation of the battery cell 20 and always keep in contact with the battery cell 20 when the battery cell 20 swells and deforms, thereby ensuring a heat transfer effect and reducing a probability of dry burning of the heating apparatus 40. In addition, the heat conducting layer 43 is in the form of the elastic pad, which can also avoid rigid contact between the heating apparatus 40 and the battery cell 20, and reduce damage to the battery cell 20 in a vibration process during battery transportation or the like.

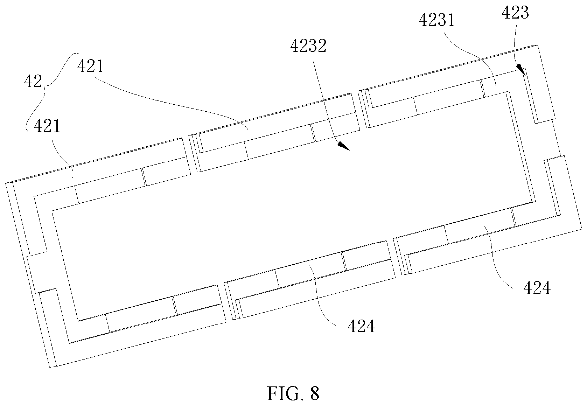

Referring to FIG. 8, in some optional embodiments, the adapting component 42 has a restraint trough 423, a shape of the heating sheet 41 matches a shape of the restraint trough 423, the heating sheet 41 is clamped in the restraint trough 423, and the restraint trough 423 is configured to restrict relative positions of the heating sheet 41 and the adapting component 42.

Optionally, the shape of the restraint trough 423 matches an outline of the heating sheet 41.

Optionally, the restraint trough 423 can be another polygonal trough such as a rectangular trough.

Optionally, the heating sheet 41 may be partially or completely located in the restraint trough 423.

Optionally, the restraint trough 423 is configured to restrict relative positions of the heating sheet 41 and the adapting component 42. In other words, the restraint trough 423 restricts the heating sheet 41 to a predetermined position of the adapting component 42, which can restrict a movement of the heating sheet 41 relative to the adapting component 42.

In the heating apparatus 40 provided in this embodiment of this application, the restraint trough 423 is disposed on the adapting component 42, so that a connection between the adapting component 42 and the heating sheet 41 can be implemented via the restraint trough 423. In addition, when being mounted to the adapting component 42, the heating sheet 41 can be positioned and restricted by using the restraint trough 423, thereby satisfying a mounting need.

In some optional embodiments, in the heating apparatus 40 provided in this embodiment of this application, the restraint trough 423 has a bottom wall 4231 abutting against the heating sheet 41, the adapting component 42 further has an avoidance hole 4232, and the avoidance hole 4232 penetrates through the bottom wall 4231 along the thickness direction Y of the heating sheet 41.

Optionally, along the thickness direction Y, an area of orthogonal projection of the avoidance hole 4232 is less than an area of orthogonal projection of the heating sheet 41.

Optionally, when the heat conducting layer 43 is included, the heat conducting layer 43 may be at least partially disposed with the avoidance hole 4232 protruding from the adapting component 42, to be in contact with the battery cell 20.

In the heating apparatus 40 provided in this embodiment of this application, the avoidance hole 4232 is disposed, so that the heating sheet 41 can be in contact with the battery cell 20 directly or indirectly through the heat conducting layer 43, to satisfy a heat transfer need and a heating need of the battery cell 20.

In some optional embodiments, the heating sheet 41 is adhered to the adapting component 42.

Optionally, the heating sheet 41 and the adapting component 42 can be fixedly connected by using a fluid connecting adhesive after curing. Certainly, the heating sheet 41 can also be connected in a form of solid adhesive tape such as double-sided adhesive tape.

In the heating apparatus 40 provided in this embodiment of this application, the heating sheet 41 and the adapting component 42 are adhered, so that strength of the connection between the heating sheet 41 and the adapting component 42 can be ensured, without disposing a structure such as a connection hole on the surface of the heating sheet 41, thereby ensuring heating performance of the heating sheet 41 and facilitating implementation of the connection between the heating sheet 41 and the adapting component 42.

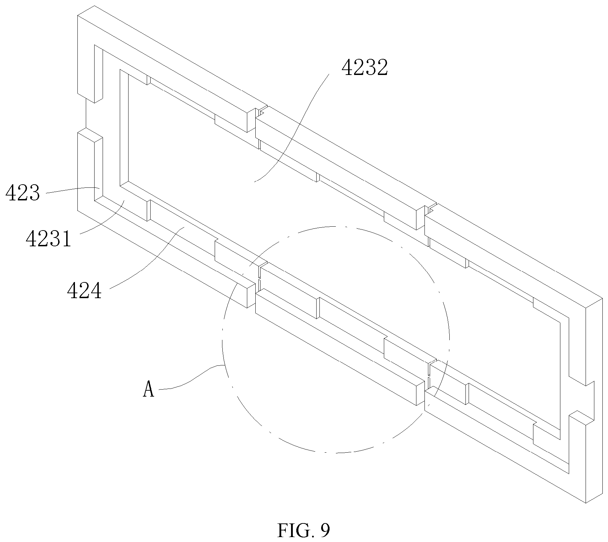

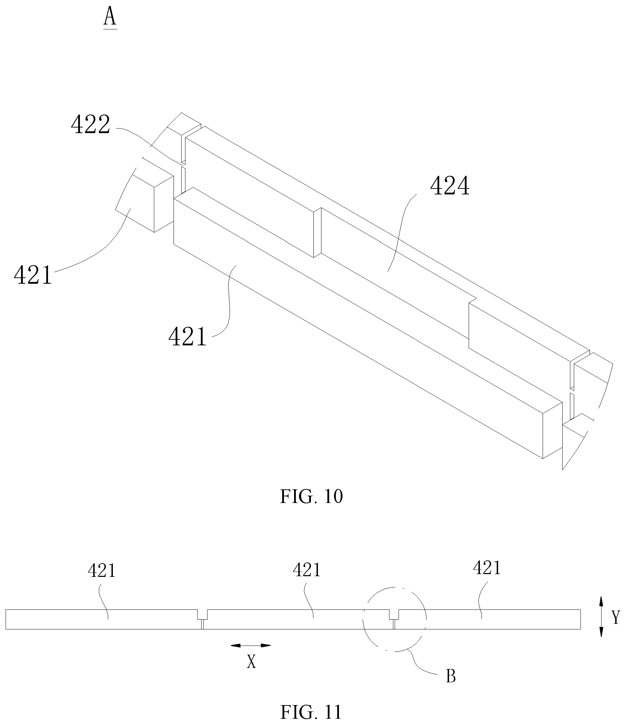

Referring to FIG. 9 and FIG. 10, in some optional embodiments, in the heating apparatus 40 provided in this embodiment of this application, the restraint trough 423 has a bottom wall 4231 abutting against the heating sheet 41, the adapting component 42 further has an adhesive accommodating trough 424, the adhesive accommodating trough 424 is formed by recessing the bottom wall 4231 in a direction leaving the heating sheet 41, the adhesive is arranged in the adhesive accommodating trough 424, and the adhesive is configured to connect the heating sheet 41 to the adapting component 42.

Optionally, the restraint trough 423 may be in a circular, elliptical or polygonal shape.

Optionally, the number of the restraint troughs 423 may be one or more than one.

In the heating apparatus 40 provided in this embodiment of this application, the adhesive accommodating trough 424 is disposed in the bottom wall 4231 of the restraint trough 423, so that an adhesive applying area and space can be provided, which facilitates fastening of the heating sheet 41 in the restraint trough 423 of the adapting component 42 via the adhesive, thereby preventing the heating sheet 41 from moving and affecting a heat conducting effect during transportation and assembly processes, and avoiding uneven heating or a dry burning phenomenon.

In some optional embodiments, in the heating apparatus 40 provided in this embodiment of this application, the number of adhesive accommodating troughs 424 is at least two, and the at least two adhesive accommodating troughs 424 are arranged at intervals.

Optionally, the number of adhesive accommodating troughs 424 can be two or more than two.

In the heating apparatus 40 provided in this embodiment of this application, the number of adhesive accommodating troughs 424 is set to at least two, so that the adhesive can be disposed in each adhesive accommodating trough 424. An adhesion area between the heating sheet 41 and the adapting component 42 can be increased in a multi-point connection mode, so that the strength of the connection between the heating sheet 41 and the adapting component 42 can be ensured.

Referring to FIG. 11 to FIG. 14, in some optional embodiments, in the heating apparatus 40 provided in this embodiment of this application, a connecting portion 422 is arranged between two adjacent adapting bodies 421 along the length direction X; in the initial state, the two adjacent adapting bodies 421 are connected through the connecting portion 422; and in the stretched state, the connecting portion 422 is broken, so that the two adjacent adapting bodies 421 are disconnected from each other.

Optionally, strength of the connecting portion 422 is less than strength of the adapting body 421. When external force exceeds the preset threshold range, the connecting portion 422 is broken before the adapting body 421, so that two adjacent adapting bodies 421 are disconnected from each other and can move relatively as the battery cell 20 swells and deforms.

Optionally, the connecting portion 422 may be in a structural form of a connecting strip, a connecting block or the like.

Optionally, the number of connecting portions 422 between the two adjacent adapting bodies 421 may be one or more than one. When there are at least two connecting portions 422, the at least two connecting portions 422 are arranged at intervals.

In the heating apparatus 40 provided in this embodiment of this application, the connecting portion 422 is disposed between the two adjacent adapting bodies 421, so that the two adjacent adapting bodies 421 can be connected into a single entity through the connecting portion 422 in the initial state, which can ensure integrity of the adapting component 42, thereby facilitating fitting and mounting of the adapting component 42, the heating sheet 41, and the battery cell 20. When the thickness dimension is increased because the battery cell 20 swells and deforms, the connecting portion 422 is broken before the adapting body 421, so that two adjacent adapting bodies 421 are disconnected from each other and can move with the swelling of the battery cell 20, to be compatible with the thickness dimension change of the battery cell 20 and avoid a dry burning phenomenon, thereby ensuring safety performance of the battery.

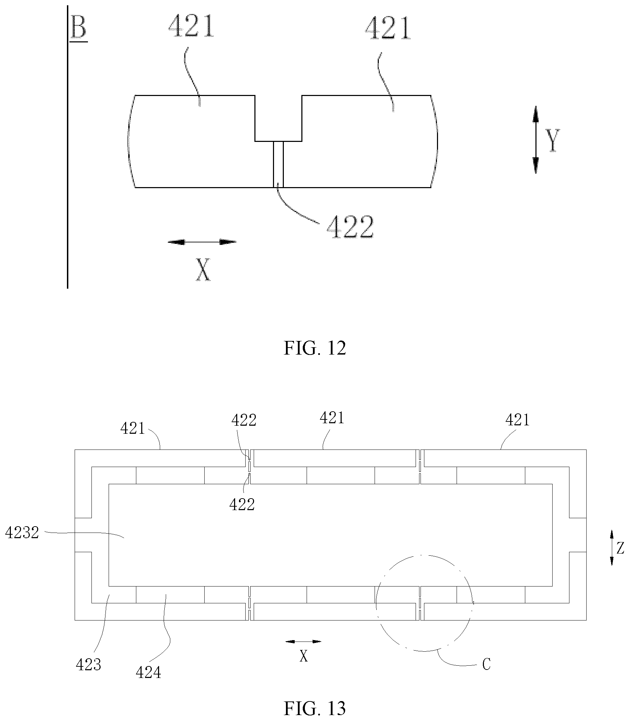

Referring to FIG. 11 and FIG. 12, in some embodiments, a thickness of the connecting portion 422 is less than a thickness of the adapting body 421 in the thickness direction Y of the heating sheet 41.

Optionally, the thickness direction Y and the length direction X of the heating sheet 41 are perpendicular to each other.

Optionally, a surface of the heating sheet 41 in the thickness direction Y faces toward the battery cell 20 and is directly or indirectly connected to the battery cell 20 to heat the battery cell 20.

In the heating apparatus 40 provided in this embodiment of this application, a thickness of the connecting portion 422 is less than a thickness of the adapting body 421, which can easily ensure that strength of the connecting portion 422 is less than strength of the adapting body 421, so that the connecting portion 422 is easily broken when the heating apparatus 40 is switched from the initial state to the stretched state, to be compatible with the thickness dimension change of the battery cell 20.

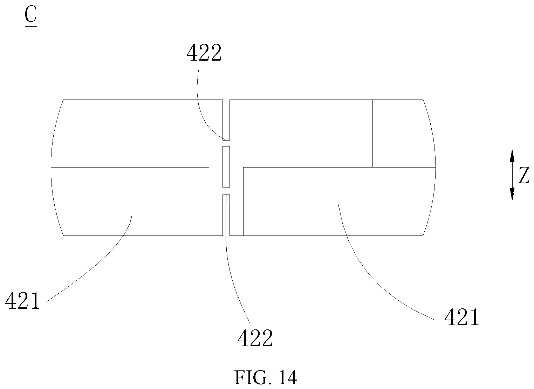

Referring to FIG. 13 and FIG. 14, in some embodiments, in the width direction Z of the heating sheet 41, the width of the connecting portion 422 is less than the width of the adapting body 421.

Optionally, the width direction Z, the length direction X, and the thickness direction Y of the heating sheet 41 are perpendicular to each other.

Optionally, the number of connecting portions 422 can be at least two, the at least two connecting portions 422 are distributed at intervals in the width direction Z, each connecting portion 422 is connected to two adjacent adapting bodies 421, and a tear trough is formed between the two adjacent connecting portions 422 along the width direction Z.

In the heating apparatus 40 provided in this embodiment of this application, a width of the connecting portion 422 is less than a width of the adapting body 421, which also helps to ensure that strength of the connecting portion 422 is less than strength of the adapting body 421, so that the connecting portion 422 is easily broken when the heating apparatus 40 is switched from the initial state to the stretched state, to be compatible with the thickness dimension change of the battery cell 20.

According to some embodiments of this application, this application also provides a battery, including a plurality of battery cells 20 and the heating apparatus 40 in any one of the foregoing solutions, and the heating sheet 41 is connected to the plurality of battery cells 20 through the adapting component 42 to heat the plurality of battery cells 20.

Because the battery provided in this embodiment of this application includes the heating apparatus 40 provided in the foregoing embodiments, a heating need of the battery can be satisfied. In addition, when the heating unit 411 moves along with the adapting body 421, the connecting body 412 can extend, which can ensure a compatibility effect on the thickness dimension change during swelling of the battery cell 20, and avoid the dry burning phenomenon caused due to wrinkling of the heating apparatus 40, thereby improving the safety performance of the battery.

According to some embodiments of this application, this application also provides an electric apparatus including the foregoing battery 100. The battery 100 is configured to supply electric energy to the electric apparatus. The electric apparatus can be any one of the foregoing apparatuses or systems using batteries.

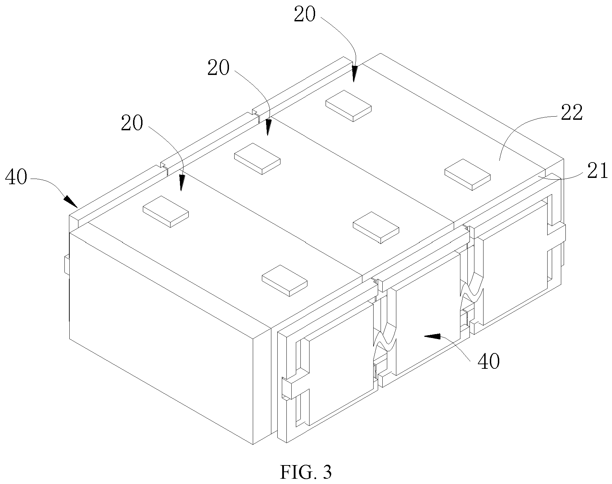

Referring to FIG. 3 to FIG. 10, the heating apparatus 40 provided in this embodiment of this application includes a heating sheet 41, an adapting component 42, and a heat conducting layer 43. The heating sheet 41 is configured to heat the battery cell 20, and the heating sheet 41 includes at least two heating units 411, a connecting body 412, an input terminal 413, and an output terminal 414. The at least two heating units 411 are distributed along the length direction X. The connecting body 412 is configured to connect two adjacent heating units 411. Along the length direction X, the connecting body 412 is extended along a curved track and is arranged in a stretchable manner along the length direction X. In the two outermost heating units 411, one heating unit 411 is connected to an input terminal 413 and the other heating unit 411 is connected to an output terminal 414. The heating unit 411, the connecting body 412, the input terminal 413 and the output terminal 414 form an integrated structure.

The adapting component 42 is configured to connect the heating sheet 41 to the battery cell 20. The adapting component 42 includes at least two adapting bodies 421 distributed along the length direction X and a connecting portion 422 for connecting two adjacent adapting bodies 421. The number of heating units 411 is the same as the number of adapting bodies 421, and each heating unit 411 is connected to one adapting body 421. The adapting component 42 has a restraint trough 423 and an adhesive accommodating trough 424. A shape of the heating sheet 41 matches a shape of the restraint trough 423 and the heating sheet 41 is clamped in the restraint trough 423. The restraint trough 423 is configured to restrict relative positions of the heating sheet 41 and the adapting component 42. The restraint trough 423 has a bottom wall 4231 abutting against the heating sheet 41, and the adapting component 42 further has an avoidance hole 4232. The avoidance hole 4232 penetrates through the bottom wall 4231 along the thickness direction Y of the heating sheet 41. The adhesive accommodating trough 424 is formed by recessing the bottom wall 4231 in a direction leaving the heating sheet 41, the adhesive is arranged in the adhesive accommodating trough 424, and the adhesive is configured to connect the heating sheet 41 to the adapting component 42. The heat conducting layer 43 is connected to the heating sheet 41, and the heat conducting layer 43 is configured to transfer heat from the heating sheet 41 to the battery cell 20. The heat conducting layer 43 is an elastomer and is configured to abut against the battery cell 20. The heating apparatus 40 is able to be switched from an initial state to a stretched state. In the initial state, along the length direction X, a length dimension of the heating sheet 41 is the first dimension, and two adjacent adapting bodies 421 are connected through the connecting portion 422; and in the stretched state, along the length direction X, the heating sheet 41 is stretched and extended from the first dimension to the second dimension, and at least two adjacent adapting bodies 421 are disconnected from each other, to adapt to the thickness dimension change caused due to the swelling of the battery cell 20 and avoid a dry burning phenomenon, thereby ensuring safety performance of the battery.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A heating apparatus, **characterized by** comprising:
a heating sheet, configured to heat a battery cell, wherein the heating sheet is configured to be stretchable in a length direction of the heating sheet; and
an adapting component, configured to connect the heating sheet to the battery cell, wherein the adapting component comprises at least two adapting bodies distributed along the length direction,
wherein the heating apparatus is capable of being switched from an initial state to a stretched state;
in the initial state, along the length direction, a length dimension of the heating sheet is a first dimension, and two adjacent adapting bodies are connected; and
in the stretched state, along the length direction, the heating sheet is stretched and extended from the first dimension to a second dimension, at least two adjacent adapting bodies are disconnected from each other, and the second dimension is a vertical distance between two end surfaces of the heating sheet along the length direction in the stretched state.

2. The heating apparatus according to claim 1, wherein the heating sheet comprises at least two heating units and a connecting body, the at least two heating units are distributed along the length direction, the connecting body is configured to connect two adjacent heating units, the connecting body is configured to be stretchable along the length direction, and each heating unit is connected to one adapting body.

3. The heating apparatus according to claim 2, wherein the connecting body extends along a curved track along the length direction; or
along the length direction, the connecting body extends along a zigzag line track.

4. The heating apparatus according to claim 2, wherein the heating unit has a polygonal block-shaped structure.

5. The heating apparatus according to claim 2, wherein the heating sheet further comprises an input terminal and an output terminal, and in two outermost heating units along the length direction, one heating unit is connected to the input terminal and the other heating unit is connected to the output terminal.

6. The heating apparatus according to claim 5, wherein the heating unit, the connecting body, the input terminal, and the output terminal form an integrated structure.

7. The heating apparatus according to claim 1, wherein the heating apparatus further comprises a heat conducting layer, the heat conducting layer is connected to the heating sheet, and the heat conducting layer is configured to transfer heat from the heating sheet to the battery cell.

8. The heating apparatus according to claim 7, wherein the heat conducting layer is an elastomer and is configured to abut against the battery cell.

9. The heating apparatus according to any one of claims 1 to 8, wherein the adapting component has a restraint trough, a shape of the heating sheet matches a shape of the restraint trough, the heating sheet is clamped in the restraint trough, and the restraint trough is configured to restrict relative positions of the heating sheet and the adapting component.

10. The heating apparatus according to claim 9, wherein the restraint trough has a bottom wall abutting against the heating sheet, the adapting component further has an avoidance hole, and the avoidance hole penetrates through the bottom wall along a thickness direction of the heating sheet.

11. The heating apparatus according to claim 9, wherein the heating sheet is adhered to the adapting component.

12. The heating apparatus according to claim 11, wherein the restraint trough has a bottom wall abutting against the heating sheet, the adapting component further has an adhesive accommodating trough, the adhesive accommodating trough is formed by recessing the bottom wall in a direction away from the heating sheet, an adhesive is arranged in the adhesive accommodating trough, and the adhesive is configured to connect the heating sheet to the adapting component.

13. The heating apparatus according to claim 12, wherein the number of adhesive accommodating troughs is at least two, and the at least two adhesive accommodating troughs are arranged at intervals.

14. The heating apparatus according to any one of claims 1 to 8, wherein a connecting portion is arranged between two adjacent adapting bodies along the length direction;
in the initial state, the two adjacent adapting bodies are connected through the connecting portion; and
in the stretched state, the connecting portion is broken, so that the two adjacent adapting bodies are disconnected from each other.

15. The heating apparatus according to claim 14, wherein a thickness of the connecting portion is less than a thickness of the adapting body in a thickness direction of the heating sheet; and/or
a width of the connecting portion is less than a width of the adapting body in a width direction of the heating sheet.

16. A battery, **characterized by** comprising:
a plurality of battery cells; and
the heating apparatus according to any one of claims 1 to 15, wherein the heating sheet is connected to the plurality of battery cells through the adapting component to heat the plurality of battery cells.

17. An electric apparatus, **characterized by** comprising the battery according to claim 16, wherein the battery is configured to provide electrical energy.
